(19) Europäisches Patentamt
European Patent Office
Office européen des brevets

(11) Publication number: **0 572 085 A1**

(12) **EUROPEAN PATENT APPLICATION**

(21) Application number: **93201491.3**

(22) Date of filing: **25.05.93**

(51) Int. Cl.[5]: **A01N 59/20**, //(A01N59/20, 55:00,43:653,27:00,25:32)

(30) Priority: **26.05.92 IT MI921277**

(43) Date of publication of application:
**01.12.93 Bulletin 93/48**

(84) Designated Contracting States:
**AT BE CH DE DK ES FR GB GR IE IT LI LU MC NL PT SE**

(71) Applicant: **ISAGRO S.r.l.**
**Via Caboni, 3**
**I-09125 Cagliari(IT)**

(72) Inventor: **Garavaglia, Carlo**
**Piazza della Vittoria, 7**
**I-20012 Cuggiono Milan(IT)**
Inventor: **Mirenna, Luigi**
**Via Gamboloita, 4**
**I-20139 Milan(IT)**
Inventor: **Filippini, Lucio**
**Via R. Morandi, 13/A**
**I-20097 San Donato Milanese Milan(IT)**

(74) Representative: **Roggero, Sergio**
**Ing. Barzanò & Zanardo Milano S.p.A.**
**Via Borgonuovo 10**
**I-20121 Milano (IT)**

(54) **Fungicidal compositions.**

(57) Fungicidal compositions comprising:
(a) 0.1-20% of triazolic derivatives of general formula (I):

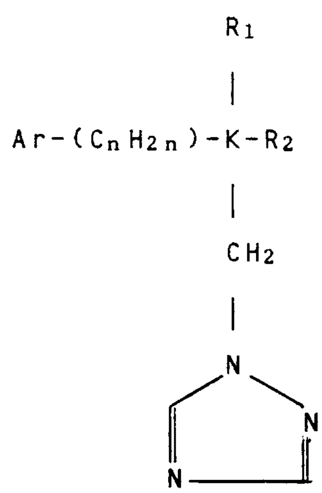

(I)

(b) 0.1-80% of copper-based compounds of general formula (II):

$CuX_2$ (II)

(c) 0.1-80% of linear or branched, long-chain $C_{10}$-$C_{50}$ hydrocarbons, which may be completely saturated or may contain from 1 to 3 unsaturations, or mixtures thereof.

EP 0 572 085 A1

The present invention relates to fungicidal compositions.

More particularly, the present invention relates to fungicidal compositions containing triazolic derivatives and copper-based compounds in association with long-chain hydrocarbons, and to their use in the agricultural field as antifungal agents.

In agricolture, many systemic fungicides, characterized by a high selectivity, are commonly used, advantageously associated with so-said "coverage" products.

In that way, the operators try to counteract the arising of resistant strains and of extending the effectiveness of the treatment to the secondary pathogenic agents which usually are indifferent to the action of the systemic fungicide.

The mixtures of fungicides and above cited coverage products furthermore contain the usual formulation components and/or additives.

The above said mixtures perform both preventative and curative activities. The preventative activity is due to the joint effect of the coverage product and of the systemic fungicide and prevents the arising of post-treatment infections. The curative activity, which is typical of the systemic fungicide, counteracts and estirpates the infections which already existed at treatment time.

Among the coverage products which have been used for long time in agricolture as protectant agents of fruit trees, vines and sugar beet, particularly important are the copper-based compounds.

Particularly advantageous results to be the use of copper-based coverage compounds and systemic fungicides based on triazolic derivatives; in fact, according to general agronomic principles, such mixtures are capable of counteracting the arising of resistant fungal strains and of widening the activity spectrum of the treatment, as disclosed, e.g., in: "Pesticide Resistance, Strategies and Tactis for Management", National Academy Press, 1986, pages 350-351.

Such associations are used, e.g., in the treatment of sugar beets for controlling Cercospora beticola, demonstrating a very good control of both the resistant strains and the other triazole indifferent pathogen agents.

Examples of such pathogen agents which can be controlled by using the above disclosed copper-based mixtures are:

- Venturia inaequalis, on fruit trees;
- Monilia laxa, on fruit trees;
- Monilia fructigena, on fruit trees;
- Phytophthora cactorum, on fruit trees;
- Botrytis cinerea, on vines;
- Plasmopara viticola, on vines;
- Guignardia bidwellii, on beet;
- Microsphaera betae, on vines
- Ramularia betae, on beet;
- Alternaria tenuis, on beet;
- Peronospora schachtii, on beet; and so forth.

The association of triazolic derivatives and copper-based compounds implies however a decrease in the fungicidal activity of the same triazole, whichever the nature of the cupric compound used is, as reported, e.g., in patent application WO 89/08395.

In the above said patent application, in which the fungicidal activity is compared of flusilazole (triazole derivative) on oidium of barley, either alone and in association with copper thallate, it may be observed that the activity of flusilazole shows a decrease over time which takes place at a higher rate when said agent is associated with copper thallate.

The present Applicant surprisingly found now that the addition of long-chain, linear or branched hydrocarbons, to the mixtures of triazolic derivatives and copper-based compounds known from the prior art, not only makes it possible the fungicidal activity of the triazolic derivative to be retained, but sometimes, causes an increase thereof.

Therefore, the subject-matter of the present invention are fungicidal compositions comprising:

(a) 0.1-20% of triazolic derivatives of general formula (I):

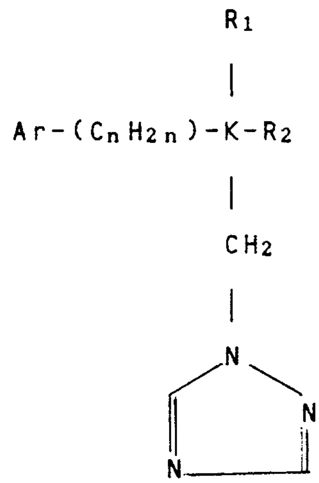

(I)

wherein:

-- $R_1$ represents a hydrogen atom, or OH, CN and CH3 groups;

-- $R_2$ represents the following radicals, which may be either linear or branched: $C_1$-$C_8$ alkyl or cycloalkyl or alkoxy optionally substituted with halogens such as, e.g., chlorine, bromine, fluorine, or with a $C_1$-$C_4$ alkyl or haloalkoxyalkyl radical, or with a $C_1$-$C_2$ haloalkoxy radical; or a phenyl radical substituted with halogens such as, e.g., chlorine, bromine, fluorine, or with another $C_1$-$C_4$ alkyl radical, or

$R_1$, $R_2$ and K may jointly represent a $C_3$-$C_5$ heterocyclic radical containing 1 or 2 oxygen atoms, optionally substituted with halogens such as, e.g., chlorine, bromine, fluorine, or with a $C_1$-$C_4$ alkyl or haloalkoxyalkyl radical, or with a $C_1$-$C_2$ haloalkoxy radical;

-- Ar represents a para-substituted, or ortho- and para-bisubstituted phenyl radical, with such halogen radicals as, e.g., chloro, bromo, fluoro, or a phenoxy radical;

-- K represents a carbon atom or a silicon atom;

-- n is an integer comprised within the range of from 0 to 4;

(b) 0.1-80% of copper-based compounds of general formula (II):

$CuX_2$ (II)

in which X represents a chloride, sulfate, hydroxide, $C_1$-$C_{15}$ carboxylate anion;

(c) 0.1-80% of linear or branched, long-chain $C_{10}$-$C_{50}$ hydrocarbons, which may be completely saturated or may contain from 1 to 3 unsaturations, or mixtures thereof.

The compositions disclosed above are antifungal agents for agricultural purposes.

Examples of $R_2$ moieties are: (1,1,2,2-tetrafluoroethoxy)methyl, 1-methylcyclopropyl, tert-butyl, n-hexyl, n-propyl, and so forth.

Examples of $C_3$-$C_5$ heterocyclic moieties in which $R_1$, $R_2$ and K are considered jointly, are: 1,3-dioxolane, tetrahydrofuran, 2,2-dimethyloxyzane, and so forth.

Examples of Ar moieties are: 4-fluorophenyl, 4-chlorophenyl, 2,4-dichlorophenyl, 4-(4-chlorophenoxy)-2-chlorophenyl, and so forth.

Examples of triazolic derivatives of general formula (I) are: tetraconazole, cyproconazole, difenoconazole, diniconazole, flusilazole, flutriafol, furconazole, hexaconazole, myclobutanil, penconazole, propiconazole, triadimefon, triadimenol, tebuconazole, fenbuconazole, epiconazole, and so forth.

Examples of copper-based compounds of general formula (II) are: copper oxychloride, Bordeaux mixture, copper hydroxide, cuprous oxide, copper thallate, and so forth.

Examples of hydrocarbons are: dodecane, squalane, and so forth.

Examples of hydrocarbon blends are: petrolem fractions commercially known as ligroins, vaseline oil, white oil, and so forth.

The compositions according to the present invention display a particularly high fungicidal activity against phytopathogen fungi which attack cereal and cucurbit crops, vines and orchards.

Besides displaying an antifungal action of both curative and preventative character, the fungicidal compositions according to the present invention display a complete tolerability by the plants which must be

protected from fungal infection.

For practical uses in agricolture, the fungicidal compositions according to the present invention are used as aqueous emulsions containing from 99.9% to 90% of water.

The application of these compositions may take place on every part of the interested plant, for example, on leaves, stems, branches and roots, or on the same seeds, before sowing, or also on the soil on which the plant grows.

The following examples are reported for illustrative purposes and are not limitative of the present invention.

Example 1

Tests of curative activity on Puccinia graminis (wheat rust) of triazoles/copper oxychloride blends.

Wheat seedlings cultivar Irnerio grown in pots in a conditioned environment, are artificially infected by being dusted with a mixture of spores of Puccinia graminis in talc (100 mg of spores/5 mg of talc) and being kept 48 hours in an environment saturated with humidity at 21 ° C.

The so infected plants are treated by being sprayed on both leaf faces up to incipient dripping, with the aqueous emulsions of the above disclosed compositions, prepared by mixing the triazolic fungicide, formulated as an emulsifiable oil, the cupric compound and vaseline oil in the necessary amounts in order to obtain the concentrations reported in Table 1.

After a 14-day stay in a conditioned environment for fungus incubation, the protection degree of plants was evaluated according to an evaluation scale comprised within the range of from 100 (healthy plant) to 0 (completely infected plant).

The activity results are reported in Table 1.

Example 2

Determination of curative activity on Puccinia graminis of compositions containing tetraconazole, copper-based compounds and vaseline oil in greenhouse tests.

By operating according to the same modalities as of Example 1, the results were obtained which are reported in Table 2.

Example 3

Determination of the activity on Cercospora beticola of the compositions containing tetraconazole, copper-based compounds and vaseline oil in field tests.

On beet plants grown in open field, two treatments of leaves were carried out with a 20-day interval, aiming at controlling Cercospora beticola.

The test was carried out on 28-30 $m^2$ plots according to a randomized-blocks experimental plan with 4 repetitions (plot) per thesis.

For the treatments, aqueous emulsions of the tested compositions were used, with a volume of emulsion being distributed which corresponded to 500 l/ha of aqueous emulsion at the dosage rate set forth in Table 3.

The effectiveness of the treatments was evaluated as percent protection rate of plants in treated plots, based on the damage suffered by the plants in non-treated plots.

The experimental results are reported in Table 3.

TABLE 1

| Triazole | Dosage rate of A.P. (ppm) | A | A + B | A + B |
|---|---|---|---|---|
| | | 0 | 9 + 0 | 9 + 5 |

TABLE 1 (continues)

| Triazole | Dosage rate of A.P. (ppm) | A 0 | A + B 9 + 0 | A + B 9 + 5 |
|---|---|---|---|---|
| | 125.0 | 100 | 100 | 100 |
| Tetraconazole | 30.0 | 100 | 90 | 100 |
| (E.O. 10) | 7.5 | 93 | 50 | 100 |
| | 1.8 | 60 | 20 | 80 |
| | 125.0 | 100 | 95 | 100 |
| Propiconazole | 30.0 | 96 | 70 | 98 |
| (E.O. 10) | 7.5 | 80 | 20 | 85 |
| | 1.8 | 44 | 00 | 60 |
| | 125.0 | 100 | 100 | 100 |
| Cyproconazole | 30.0 | 100 | 85 | 100 |
| (E.O. 10) | 7.5 | 100 | 70 | 100 |
| | 1.8 | 97 | 50 | 100 |
| | 125.0 | 100 | 98 | 100 |
| Flusilazole | 30.0 | 100 | 70 | 100 |
| (E.O. 10) | 7.5 | 70 | 40 | 95 |
| | 1.8 | 30 | 0 | 60 |
| | 125.0 | 100 | 100 | 100 |
| Flutriafol | 30.0 | 100 | 88 | 100 |
| (E.O. 10) | 7.5 | 90 | 60 | 100 |
| | 1.8 | 30 | 0 | 70 |

TABLE 1 (continues)

| Triazole | Dosage rate of A.P. (ppm) | A 0 | A + B 9 + 0 | A + B 9 + 5 |
| --- | --- | --- | --- | --- |
| | 125.0 | 100 | 100 | 100 |
| Tebuconazole | 30.0 | 100 | 80 | 100 |
| (E.O. 10) | 7.5 | 93 | 50 | 100 |
| | 1.8 | 70 | 20 | 95 |

E.O. = emulsifiable oil

A.P. = Active principle

A = copper oxychloride (g/L)

B = vaseline oil (g/L)

TABLE 2

| Triazole | Dosage rate of A.P. (ppm) | Vaseline oil mg/L 0 | 500 |
| --- | --- | --- | --- |
| Tetraconazole | 125.0 | 100 | 100 |
| (E.O. 10) | 30.0 | 88 | 100 |
| + Bordeaux | 7.5 | 55 | 100 |
| mixture(*) | 1.8 | 15 | 70 |

TABLE 2 (continues)

| Triazole | Dosage rate of A.P. (ppm) | Vaseline oil mg/l 0 | 500 |
|---|---|---|---|
| Tetraconazole | 125.0 | 100 | 100 |
| (E.O. 10) | 30.0 | 90 | 100 |
| + copper | 7.5 | 30 | 95 |
| hydroxide(*) | 1.8 | 00 | 60 |
| Tetraconazole | 125.0 | 78 | 100 |
| (E.O. 10) | 30.0 | 45 | 100 |
| + copper | 7.5 | 15 | 90 |
| thallate(*) | 1.8 | 00 | 60 |

(*) dosage rate of cupric compound = 9 g/l

E.O. and A.P.: see footnotes to Table 1

TABLE 3

| Triazole | Dosage rate of A.P. g/ha | Effectiveness (protection % rate) |
|---|---|---|
| Tetraconazole (E.O. 10) | 50 | 83 |
| Tetraconazole (E.O. 10) + copper oxychloride | 50 + 900 | 70 |
| Tetraconazole (E.O. 10) + copper oxychloride + vaseline oil | 50 + 900 + 500 | 95 |
| E.O. and A.P.: see footnotes to Table 1 | | |

## Claims

**1.** Fungicidal compositions comprising:
(a) 0.1-20% of triazolic derivatives of general formula (I):

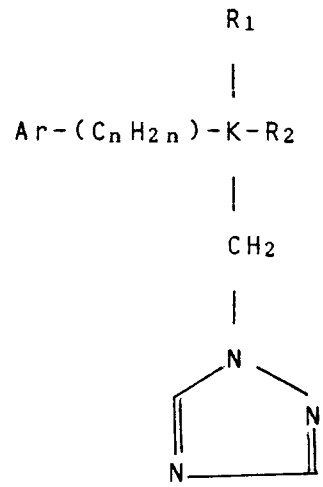

(I)

wherein:

-- $R_1$ represents a hydrogen atom, or OH, CH and CH3 groups;

-- $R_2$ represents the following radicals, which may be either linear or branched: $C_1$-$C_8$ alkyl, cycloalkyl or alkoxy optionally substituted With halogens such as, e.g., chlorine, bromine, fluorine, or with a $C_1$-$C_4$ alkyl or haloalkoxyalkyl radical, or with a $C_1$-$C_2$ haloalkoxy radical; or a phenyl radical substituted with halogens such as, e.g., chlorine, bromine, fluorine, or with another $C_1$-$C_4$ alkyl radical, or

$R_1$, $R_2$ and K may jointly represent a $C_3$-$C_5$ heterocyclic radical containing 1 or 2 oxygen atoms, optionally substituted with halogens such as, e.g., chlorine, bromine, fluorine, or with a $C_1$-$C_4$ alkyl or haloalkoxyalkyl radical, or with a $C_1$-$C_2$ haloalkoxy radical;

-- Ar represents a para-substituted, or ortho- and para-bisubstituted phenyl radical, with such halogen radicals as, e.g., chloro, bromo, fluoro, or a phenoxy radical;

-- K represents a carbon atom or a silicon atom;

-- n is an integer comprised within the range of from 0 to 4;

(b) 0.1-80% of copper-based compounds of general formula (II):

$CuX_2$ (II)

in which X represents a chloride, sulfate, hydroxide, $C_1$-$C_{15}$ carboxylate anion;

(c) 0.1-80% of linear or branched, long-chain $C_{10}$-$C_{50}$ hydrocarbons, which may be completely saturated or may contain from 1 to 3 unsaturations, or mixtures thereof.

**2.** Fungicidal compositions according to claim 1, in which $R_2$ is: (1,1,2,2-tetrafluoroethoxy)methyl, 1-methylcyclopropyl, tert-butyl, n-hexyl, n-propyl.

**3.** Fungicidal compositions according to claim 1, in which $R_1$, $R_2$ and K, considered jointly, are: 1,3-dioxolane, tetrahydrofuran, 2,2-dimethyloxyzane.

**4.** Fungicidal compositions according to claim 1, in which Ar is: 4-fluorophenyl, 4-chlorophenyl, 2,4-dichlorophenyl, 4-(4-chlorophenoxy)-2-chlorophenyl.

**5.** Fungicidal compositions according to claim 1, in which the triazolic derivatives of general formula (I) are: tetraconazole, cyproconazole, difenoconazole, diniconazole, flusilazole, flutriafol, furconazole, hexaconazole, myclobutanil, penconazole, propiconazole, triadimefon, triadimenol, tebuconazole, fenbuconazole, epiconazole.

**6.** Fungicidal compositions according to claim 1, in which the copper-based compounds of general formula (II) are: copper oxychloride, Bordeaux mixture, copper hydroxide, cuprous oxide, copper thallate.

**7.** Fungicidal compositions according to claim 1, in which the hydrocarbons are: dodecane, squalane.

**8.** Fungicidal compositions according to claim 1, in which the hydrocarbon mixtures are: petroleum fractions commercially known as ligroins, vaseline oil, white oil.

**9.** Fungicidal compositions according to any of the preceding claims, used as aqueous emulsions containing from 99.9% to 90% of water.

**10.** Method for combatting the fungal infections, consisting in applying to plants, leaves, stems, branches and roots, or on the seeds before sowing, or on the soil on which the plant grows, fungicidal compositions according to claim 9.

European Patent Office

# EUROPEAN SEARCH REPORT

Application Number

EP 93 20 1491

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 630 193 (NEHEZVEGYIPARI KUTATO INTEZET)<br>* page 3, line 30 - line 66 *<br>* page 4, line 68 - page 5, line 1 *<br>* page 7; examples 27,30 *<br>--- | 1-10 | A01N59/20<br>//(A01N59/20, 55:00, 43:653, 27:00, 25:32) |
| X | GB-A-2 199 749 (SANDOZ)<br>* page 1, paragraph 4 *<br>* page 2, paragraph 7 *<br>* page 4, line 1 - line 18 *<br>* page 4, paragraph 8 *<br>* page 6, paragraph 1 -paragraph 4 *<br>* claims 4,13,14,25 *<br>--- | 1-10 | |
| X | EP-A-0 135 855 (BAYER)<br>* page 1, line 13 - page 2, line 10 *<br>* page 8, line 5 - line 8 *<br>* page 15, line 30 - line 31 *<br>--- | 1-10 | |
| Y | EP-A-0 106 106 (BAYER)<br>* page 1, line 14 - page 2, line 4 *<br>* page 3, line 22 - page 4, line 13 *<br>* page 7, line 16 - line 25 *<br>* page 8, line 1 - line 2 *<br>--- | 1-10 | TECHNICAL FIELDS SEARCHED (Int. Cl.5)<br><br>A01N |
| Y | DE-A-1 542 859 (DAUDIN)<br>* the whole document *<br>--- | 1-10 | |
| P,X | WO-A-9 302 557 (HICKSON INTERNATIONAL)<br>* page 12; example 9 *<br>--- | 1-10 | |
| A | US-A-4 230 694 (S.KIYOSHI)<br>* the whole document *<br><br>----- | 1-10 | |

The present search report has been drawn up for all claims

| Place of search | Date of completion of the search | Examiner |
|---|---|---|
| THE HAGUE | 23 JULY 1993 | LAMERS W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document